# EUROPEAN PATENT SPECIFICATION

(11) **EP 3 159 546 B1**
(45) Date of publication and mention of the grant of the patent: **24.02.2021**
(21) Application number: 16185842.8
(22) Date of filing: 26.08.2016
(51) Int. Cl.: F04D 13/06, F02C 7/236, F04D 29/58

(54) **PUMP**
PUMPE
POMPE

(30) Priority: 21.10.2015 GB 201518622
(43) Date of publication of application: 26.04.2017
(73) Proprietor: Rolls-Royce plc, London N1 9FX (GB)
(72) Inventor: BROOKES, David, Derby, Derbyshire DE24 8BJ (GB); YATES, Martin, K., Derby, Derbyshire DE24 8BJ (GB)
(74) Representative: Rolls-Royce plc

(56) References cited:
- CA-A1- 2 321 608
- DE-A1-102009 009 898
- GB-A- 1 225 777
- US-A- 5 939 813
- US-A1- 2011 296 846
- US-A1- 2015 104 335
- US-B1- 6 174 143

## Description

### Field of the Invention

The present invention relates to a pump, and particularly, but not exclusively, to a low pressure pump of an aero-engine fuel pumping unit.

### Background

A typical fuel pumping unit for an aero-engine comprises a low pressure (LP) pump operable to draw fuel from a fuel tank, and supplying the fuel at boosted pressure to the inlet of a high pressure (HP) pump. The inter-stage flow between LP and HP pumps is typically used to cool engine lubrication oil in a fuel/oil heat exchanger.

Commonly, the LP pump comprises a centrifugal impeller pump whilst the HP pump comprises a positive displacement pump in the form of a twin pinion gear pump. The pumps are generally driven from a shaft on the engine accessory gearbox and therefore have a fixed speed relationship with engine running speed.

At sea level, aviation fuel dissolves air. When the partial pressure of the fuel tanks is reduced, due to increase in altitude, this air is released from the fuel. The resultant air/fuel mixture produces a multi-phase flow. Multi-phase flow can also occur at sea level, albeit to a lesser extent, as a result of pressure losses along the pipes.

In order to operate correctly and reliably, the HP pump requires fuel in a homogeneous state and not an air/fuel mixture. Increasing the inlet pressure to the HP pump forces any undissolved air back into solution. The required pressure rise is normally provided by the operation of the aircraft wing tank pumps. The fuel pumping unit, however, should be able to operate correctly even when the wing pumps are not functioning. In this case, the required HP pump inlet pressure rise is provided solely by the LP pump.

US2011/0296846 proposes an aeronautical engine including a fuel pumping device. GB1225777 proposes an electric motor driven pump. US 5939813 proposes a gap tube motor.

### Summary

As the LP pump may operate with a fuel/air mixture (multi-phase flow) it would be desirable for the LP pump being able to be driven at different speeds to the HP pump. Moreover, when there is a fixed speed relationship with engine running speed, the overall size of the LP pump is dictated by the need to provide the required pressure rise with multi-phase flow. Accordingly, in a first aspect, the present invention provides a fuel pumping unit for an aero-engine (such as a gas turbine engine) according to claim 1.

Using the electrical motor to drive the centrifugal impeller allows the LP pump to be driven at different speeds to the HP pump and at speeds independent of engine running speed. In particular, to provide a required pressure rise to deal with multi-phase flow, the LP pump can simply be run at a higher speed rather than increasing the size of the pump.

However, more generally, by configuring the pump such that the recirculation flow cools the electrical motor, the pump can avoid a need to seal the rotor ring from the impeller. In particular, a rotating seal to prevent leakage around an input drive shaft to the impeller can be avoided. Thus, advantageously, integration of the motor and the impeller can be promoted. Also motor cooling can be enhanced, allowing the motor to operate at higher power.

Moreover, because the pump can be run at a speed that raises the pressure of the fuel to a level that avoids multi-phase flow, dissolved air in the recirculation flow can be avoided, reducing the possibility of electrical breakdown within windings of the motor. Thus it may not be necessary to fully encapsulate the motor windings.

In a second aspect, the present invention provides an aero-engine (such as a gas turbine engine) having a fuel pumping unit according to the first aspect.

Features of the invention will now be set out. These are applicable singly or in any combination with any aspect of the invention.

The recirculation flow can be returned to the inlet of the impeller or to an axial location between the inlet and the outlet.

The recirculation flow can be returned to the impeller through gaps in the electrical motor.

Conveniently, the electrical motor can be fully immersed in the pumped fluid.

The centrifugal impeller is coaxial with the motor.

The centrifugal impeller has an inducer section which extends from an inlet for the fluid flow towards a (typically annular) outlet for the fluid flow. A centrifugal impeller not representing the claimed invention may further have an exducer section located in flow series between the inducer section and the outlet. Conveniently, the rotor ring is located within the impeller (e.g. within the inducer section) such that the raised pressure fluid flow passes radially outwardly of the rotor ring towards the outlet. This enables a compact pump arrangement. Also the rotor ring magnetic elements, whether permanent magnets or magnetic pole pieces, are contained within the inducer section. Since the action of centrifugal force is to move these magnetic elements radially outwards, the impeller can perform the containment without a need for e.g. an additional rotor sleeve. In particular, further containment of the rotor magnets can be avoided. However, another option not represented by the claimed invention is for the rotor ring to be mounted outside the impeller such that only the recirculation flow passes radially outwardly of the rotor ring.

The pump may further have a volute at an annular outlet to collect the raised pressure fluid flow therefrom.

It would be desirable to be able to detect the presence of multi-phase flow at a pump, such as an aero-engine LP pump, and then compensate for this by increasing the speed of the pump, e.g. in order to produce an appropriate HP pump inlet pressure rise. Accordingly, embodiments of the pump not belonging to the claimed invention may have: a variable frequency motor drive which supplies electrical power to the electrical motor; wherein the variable frequency motor drive measures the electrical power supplied to the electrical motor; and wherein the pump further has a control unit which compares the measured electrical power to a reference power, and, when the measured electrical power is less than the reference power by a predetermined amount, controls the motor drive to increase the power supplied to the electrical motor (e.g. restoring the supplied power to the reference power) thereby increasing the pressure rise produced by the centrifugal impeller. In general, the fluid mass flow through the pump is proportional to the power consumed by the pump. Thus, as multi-phase flow has a lower density than a liquid (e.g. fuel) flow in which any gas (e.g. air) is dissolved in the liquid, it is possible to determine, through the power measurement, if the density of the fluid flowing in the pump has changed. In particular, having the comparison less than the reference power by the predetermined amount can be indicative of multi-phase flow through the pump, whereby it is possible to detect and accommodate for multi-phase flow in the pump.

In these embodiments, the variable frequency motor drive typically comprises inverter power electronics. The supplied electrical power may be measured by measuring the current and voltage supplied to the electrical motor. The supplied electrical power may be measured by integrating the instantaneous electrical power supplied to the electrical motor over plural power supply cycles. The reference power may be determined from a stored model of pump performance. Another option, however, is for reference power to be based on one or more previous electrical power measurements by the variable frequency motor drive. For example, the reference power may be a previous power measurement at a time when the pump was operating under the same or greater engine fuel demand and known to be operating without multi-phase flow. Typically, the control unit increases the motor speed (i.e. phase frequency) to increase the power supplied to the electrical motor. Conveniently, the measurement of the supplied electrical power may be synchronised to the frequency of a variable pulse-width modulation (PWM) used by the variable frequency motor drive to supply the electrical power. This can help to reduce processor overhead as computation can be synchronised around a common timing. The control unit can repeat the comparison and correspondingly control the motor drive to increase the power supplied to the electrical motor by repeated increments (e.g. up to a maximum number) until the measured electrical power is no longer less than the reference power by the predetermined amount. A fault counter can be incremented on each power supply incrementation. When the fault counter reaches a threshold an alert flag can be set. When the measured electrical power is greater than the reference power by a further predetermined amount (which can be indicative of the end of multi-phase flow through the low pressure pump), the control unit can control the variable frequency motor drive to decrease the power supplied to the electrical motor (e.g. restoring the supplied power to the reference power) thereby decreasing the pressure rise produced by the pumping mechanism. Typically, the control unit decreases the motor speed (i.e. phase frequency) to decrease the power supplied to the electrical motor. Again, the control unit can repeat the comparison and correspondingly control the motor drive to decrease the power supplied to the electrical motor by repeated increments (e.g. up to a maximum number) until the measured electrical power is no longer greater than the reference power by the further predetermined amount. The fuel may be sent to the low pressure pump by one or more fuel tank pumps (e.g. wing fuel tank pumps). The control unit may then further monitor the health of the, or each, fuel tank pump from the comparison of the measured electrical power to the reference power. For example, the control unit can set an alert flag if the comparison suggests (e.g. because the measured electrical power is less than the reference power by a predetermined amount) a tank pump failure. Thus measuring the electrical power supplied to the electrical motor not only allows the LP pump to accommodate multi-phase flow, but also allows the condition of the fuel tank pumps to be monitored.

### Brief Description of the Drawings

Embodiments will now be described by way of example with reference to the accompanying drawings in which:
Figure 1 shows a longitudinal cross-section through a ducted fan gas turbine engine;
Figure 2 shows schematically a longitudinal cross-section through an LP pump of a fuel pumping unit;
Figure 3 shows schematically the rotor motor within the volume of the impeller in an end view of the pump of Figure 2 from direction A, according to an embodiment of the invention;
Figure 4 shows a recirculation flow super-imposed on the cross-section of Figure 2, according to an embodiment of the invention;
Figure 5 shows schematically a longitudinal cross-section through a variant LP pump, not belonging to the claimed invention;
Figure 6 shows schematically an end view of the pump of Figure 5 from direction B;
Figure 7 shows an example flow chart for a start-up test for the LP pump;
Figure 8 shows an example flow chart for measurement of supplied power;
Figure 9 shows an example flow chart of a continuous multi-phase flow check, where the measured power for a given pump speed is compared against a reference power derived from a stored motor driven pump characteristic; and
Figure 10 shows an example flow chart of a threshold-based multi-phase flow check;

### Detailed Description and Further Optional Features

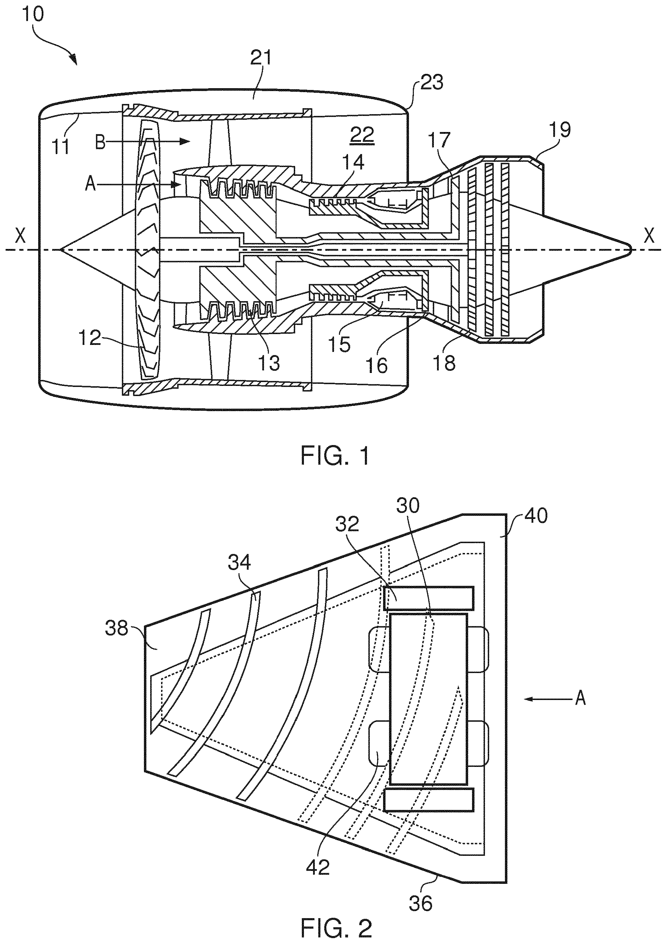

With reference to Figure 1, a ducted fan gas turbine engine incorporating the invention is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate-pressure compressor 13 and a second air flow B which passes through the bypass duct 22 to provide propulsive thrust. The intermediate-pressure compressor 13 compresses the airflow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

The engine has a fuel pumping unit (not shown in Figure 1) which receives fuel from one or more local pumps associated with respective aircraft wing fuel tanks, and supplies pressurised fuel to a fuel metering unit of the engine. The metered fuel is then sent to the burners of the combustion equipment 15.

The pumping unit has an LP and an HP pump. The HP pump can be a positive displacement (e.g. twin pinion gear) pump driven from a shaft on an engine accessory gearbox and having a fixed speed relationship with engine running speed.

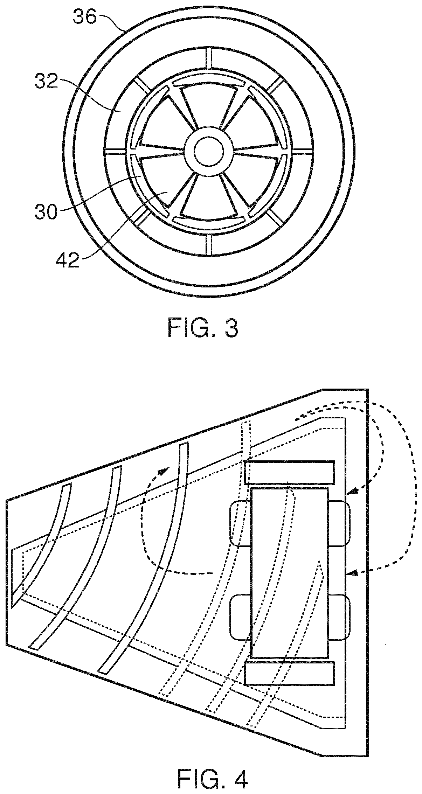

The LP pump, by contrast, is a centrifugal pump, as shown schematically in the longitudinal cross-section of Figure 2. The LP pump is suitable for pumping a multi-phase fluid and has a centrifugal impeller driven by a brushless electrical motor having an inner stator assembly 30 and an external rotor ring 32. The impeller is coaxial with the motor and has an inducer section 34 located within a housing 36 of the pump. The inducer section expands from an axially-located inlet 38 in the housing towards an annular outlet 40. The stator and rotor are arranged to be substantially located within the inducer section such that further containment of the rotor magnetic elements is unnecessary, and a compact pump can be achieved. The pump may have a volute (not shown) at the annular outlet to collect the raised pressure fluid flow therefrom. Figure 3 shows schematically an end view of the pump of Figure 2 from direction A.

The pumped fuel flow passes radially outwardly of the rotor ring 32 en route to the outlet 40. However, as shown in Figure 4, a portion of this flow (indicated by dotted, arrowed lines) is allowed to recirculate back to the impeller through the electrical motor, thus cooling the motor. In particular, the recirculation flow flows through gaps between coil windings 42 of the stator assembly and optionally also other gaps in the motor such as the gap between the stator assembly and the rotor ring. The recirculation flow can either be returned to the inlet 38 through an interior passage of the inducer section 34, or exit the interior of the inducer section 34 at an axial location between the inlet and the outlet as shown in Figure 4. The recirculation flow can enable higher power applications than would otherwise be possible though natural convection cooling of the motor.

As the fuel is at a raised pressure any undissolved air (in the case of multi-phase flow) within the fuel air mix is forced back into solution and therefore the windings of the motor are not exposed to air. This reduces the possibility of electrical breakdown within the windings and avoids a need for full encapsulation of the windings. Moreover, the pump can avoid a need to seal the rotor ring from the impeller. Indeed, the electrical motor can be fully immersed in the pumped fuel.

The electrical motor allows the pump to be run at speeds independent of engine running speed. Thus to provide a pressure rise to force any undissolved air in the fuel back into solution, the pump can simply be run at a higher speed.

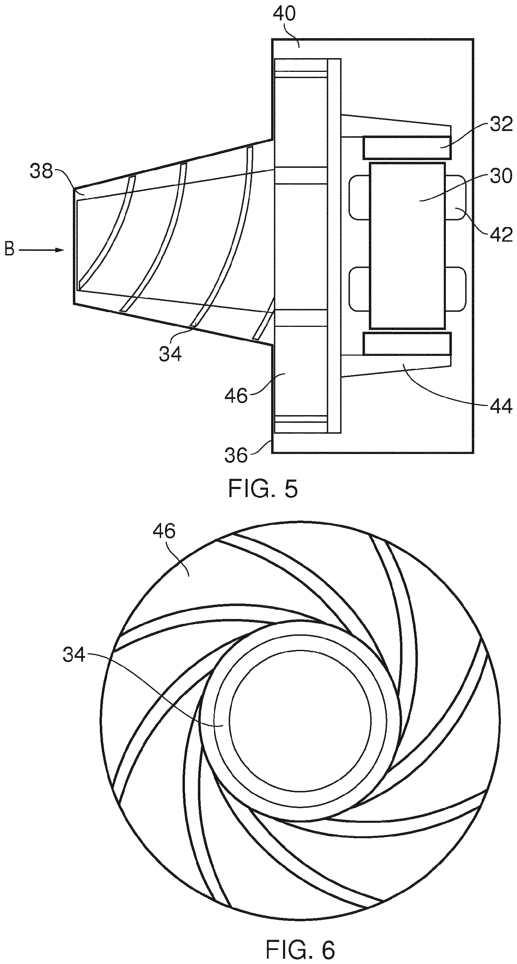

Figure 5 shows schematically a longitudinal cross-section through a variant of the LP pump. In this variant, the rotor ring 32 is located axially within an extension 44 from an exducer section 46 of the impeller. Thus only the recirculation flow passes radially outwardly of the rotor ring 32. The major part of the raised pressure flow passes from the inducer section 34 to the exducer section 46 before exiting through the annular outlet 40. However, the same motor cooling principal of recirculating outlet flow back towards the inlet is applicable to this variant. Figure 6 shows schematically an end view of the pump of Figure 5 from direction B.

The LP pump may have a variable frequency motor drive, which typically comprises inverter power electronics and may be used to vary the speed of the impeller. The variable frequency drive measures the current supplied to the motor windings (known as the phase current) to allow the motor to be successfully controlled. In addition, the variable frequency drive measures the phase voltage. This allows a control unit associated with the drive to calculate the power supplied to the motor. For example, the instantaneous voltage and current can be measured, and the resultant calculated instantaneous power can then be integrated across a defined period, such as a number of drive output cycles (typically a minimum of two).

Conveniently, the voltage and current measurement may be synchronised to the motor pulse width modulation frequency as this defines the fastest rate that the system can adjust the phase voltage, and therefore motor phase current. This synchronisation may also help to reduce processing overheads as computation can be synchronised around a common timing.

As the fluid mass flow through the pump is proportional to the power consumed, it is possible for the control unit to determine, through the power measurement described above, if the density of the fluid flowing in the pump has changed in a way that is indicative of multi-phase flow. In particular, the control unit can compare the measured electrical power to a reference power, and, when the measured electrical power is less than the reference power by a predetermined amount suitable action can be taken, such as restoring pump performance to its previous pressure rise by controlling the motor drive to increase the speed of the pumping mechanism until the power consumed is comparable to that prior to the multi-phase flow being detected. The reference power can be determined from a stored model of pump performance, or from one or more previous power measurements. Both approaches allow the comparison to be performed by the control unit as cyclic check.

In this way sufficient inlet pressure to the HP pump can be ensured without needing to "oversize" the LP pump to handle (generally infrequent) multi-phase flow events. The ability to increase the pump speed in the event of a failure in the wing tank pumps allows the LP pump to be smaller and better optimised for normal operating modes. The ability to detect multi-phase flow can also be used by the control unit to monitor the condition of the aircraft wing tank pumps. Thus the measured power can be used as both a detection and a control parameter.

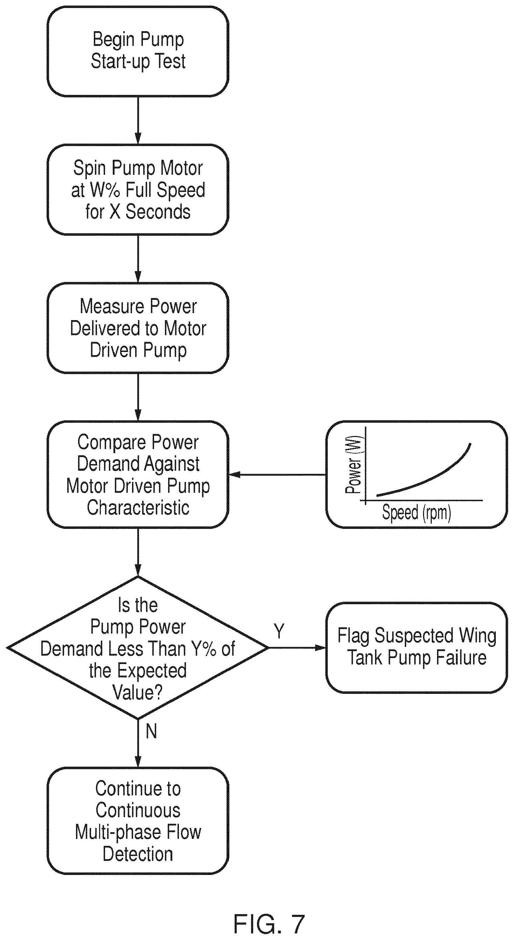

Figure 7 shows an example flow chart for a start-up test for the LP pump, which shows the pump acting as a health monitoring system for wing fuel tank pumps. In this test the pump speed is increased from zero to a defined percentage of full speed, a power measurement is made, and the value compared against a stored motor driven pump characteristic. If the measured pump power is less than the expected (reference) value by the predetermined amount (Y%), then a suspected wing tank pump failure is flagged by the control unit.

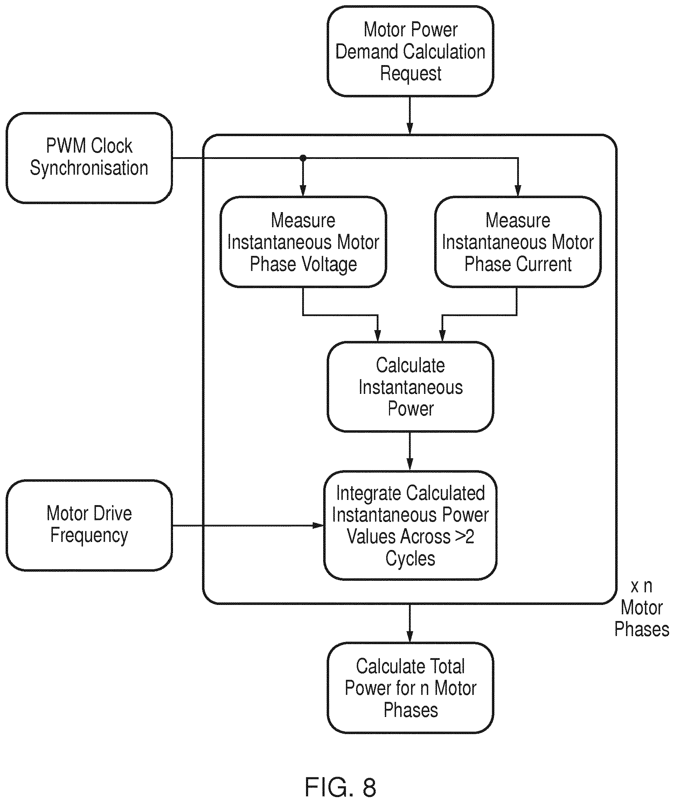

Figure 8 shows an example flow chart for measurement, by the variable frequency motor drive and the control unit, of the supplied power using parameters available in the drive. In this example, the instantaneous measured power is integrated across plural drive output cycles.

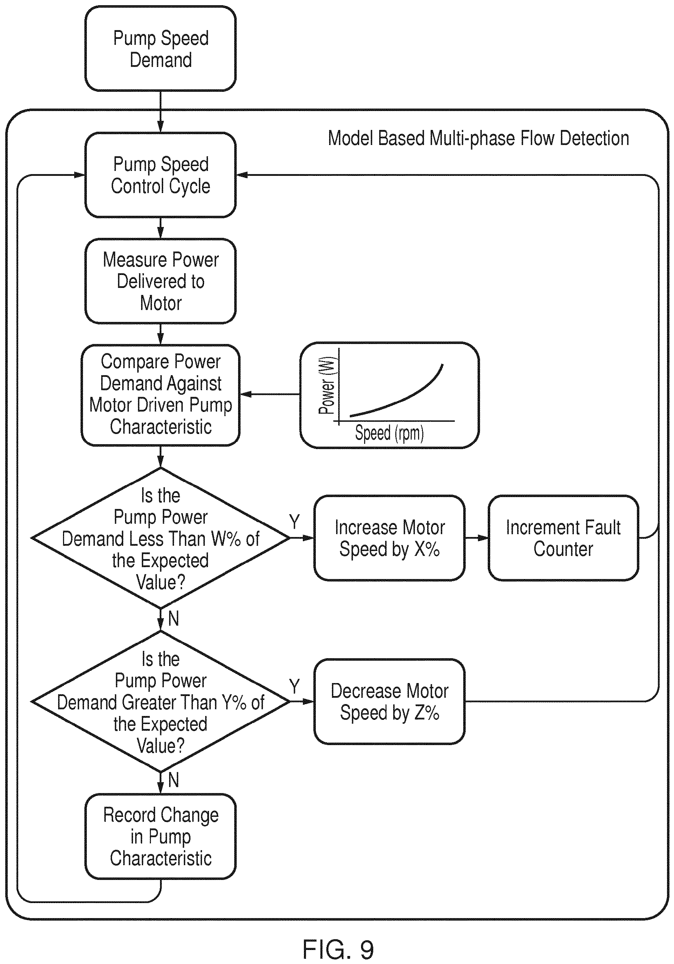

Figure 9 shows an example flow chart of a continuous multi-phase flow check, where the measured power for a given pump speed is compared against a reference power derived from a stored motor driven pump characteristic. If the measured power is less than a defined percentage of the characteristic the speed of the motor is increased and a fault counter incremented. A threshold on the fault counter can be used to flag an external fault. A second check is performed in the event of the measured power being greater than the characteristic. This can be used to decrease the motor speed should the presence of multi-phase flow cease due to external factors, such as a drop in altitude increasing the partial pressure in the aircraft wing tanks.

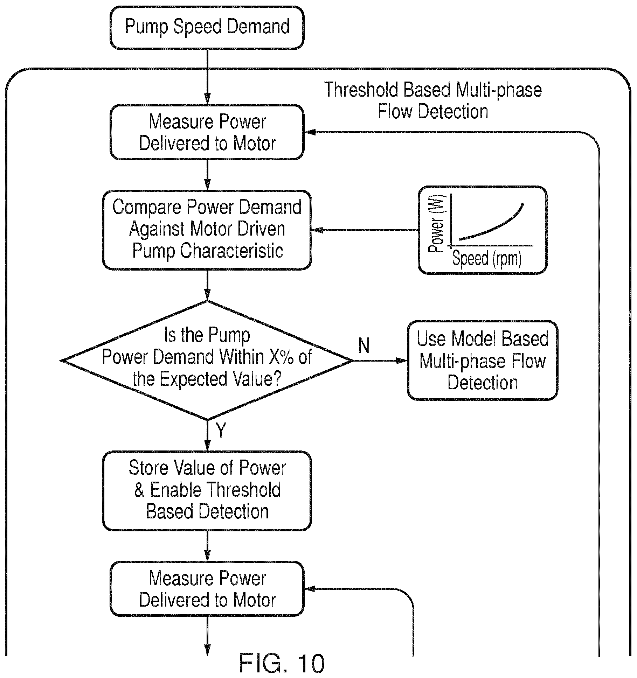

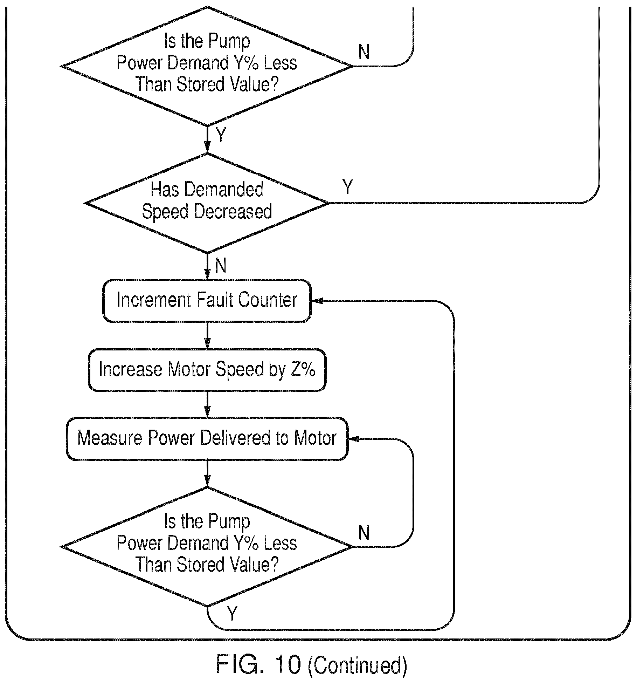

Figure 10 shows an example flow chart of a threshold-based multi-phase flow check in which the reference power is a previous power measurement at a time when the pump was operating under the same engine fuel demand and known to be operating without multi-phase flow. An initial check is performed against a defined motor driven pump characteristic in a similar way as the example of Figure 4. If the check against the characteristic is successful, a value of the required power is stored and used for subsequent threshold detection. A check is included that the demanded speed (i.e. engine fuel demand) has not decreased. If it has decreased, then the initial check is repeated. Again a fault counter, with an optional threshold to flag an external fault, can be included in the same manner as shown as the example of Figure 9.

The exemplary embodiments of the invention set forth above are considered to be illustrative and not limiting. The scope of the invention is solely defined by the appended set of claims.

## Claims

1. A fuel pumping unit for an aero-engine, the unit having a low pressure pump and a high pressure pump, the low pressure pump supplying fuel at a raised pressure to the high pressure pump for onward supply to a fuel metering unit of the engine, wherein the low pressure pump has:
a brushless electrical motor including a stator assembly (30) and a rotor ring (32) arranged externally of the stator assembly; and
a centrifugal impeller operatively connected to the rotor ring such that the electrical motor rotates the impeller, the impeller being configured to raise the pressure of fuel, wherein the impeller is coaxial with the motor and has an inducer section (34) which expands from an axially-located inlet (38) towards an annular outlet (40), the stator and rotor are arranged to be located within the inducer section,
wherein the low pressure pump is configured such that a portion of the raised pressure fuel flow is diverted to form a recirculation flow which circulates through and cools the electrical motor before being returned to the impeller for re-pressurisation thereby.

2. A fuel pumping unit according to claim 1, wherein the electrical motor is fully immersed in the pumped fuel.

3. An aero-engine having a fuel pumping unit according to any one of the previous claims.

## Patentansprüche

1. Kraftstoffpumpeneinheit für ein Flugzeugtriebwerk, wobei die Einheit eine Niederdruckpumpe und eine Hochdruckpumpe aufweist, wobei die Niederdruckpumpe Kraftstoff auf einem erhöhten Druck der Hochdruckpumpe zuführt für die weitere Zufuhr an eine Kraftstoffmesseinheit des Triebwerks, wobei die Niederdruckpumpe folgendes aufweist:
einen bürstenlosen Elektromotor mit einer Statoreinheit (30) und einem Rotorring (32), der extern zu der Statoreinheit angeordnet ist; und
einen Zentrifugalimpeller, der betriebsfähig mit dem Rotorring verbunden ist, so dass der Elektromotor den Impeller dreht, wobei der Impeller so gestaltet ist, dass er den Druck des Kraftstoffs erhöht, wobei der Impeller koaxial zu dem Motor ist und einen Vorlaufradabschnitt (34) aufweist, der sich von einem axial angeordneten Einlass (38) in Richtung eines ringförmigen Auslasses (40) ausdehnt, wobei der Stator und der Rotor angeordnet sind, dass sie sich in dem Vorlaufradabschnitt befinden;
wobei die Niederdruckpumpe so gestaltet ist, dass ein Teil des Kraftstoffflusses mit erhöhtem Druck von einem Rezirkulationsfluss umgeleitet wird, der durch den Elektromotor zirkuliert und diesen kühlt, bevor der Fluss zur erneuten Druckerzeugung zu dem Impeller zurückgeführt wird.

2. Kraftstoffpumpeneinheit nach Anspruch 1, wobei der Elektromotor vollständig in den gepumpten Kraftstoff eingetaucht ist.

3. Flugzeugtriebwerk mit einer Kraftstoffpumpeneinheit nach einem der vorstehenden Ansprüche.

## Revendications

1. Unité de pompage de carburant pour moteur d'aéronef, l'unité ayant une pompe basse pression et une pompe haute pression, la pompe basse pression fournissant du carburant à une pression élevée à la pompe haute pression pour l'alimentation ultérieure d'une unité de dosage de carburant du moteur, la pompe basse pression ayant :
un moteur électrique sans balais comprenant un ensemble stator (30) et une bague de rotor (32) disposée à l'extérieur de l'ensemble stator ; et
une roue centrifuge reliée à la bague de rotor de sorte que le moteur électrique fasse tourner la roue, la roue étant conçue pour augmenter la pression du carburant, la roue étant coaxiale avec le moteur et ayant une section d'inducteur (34) qui s'étend d'une entrée (38) située axialement vers une sortie annulaire (40), le stator et le rotor étant disposés pour être situés à l'intérieur de la section d'inducteur,
la pompe basse pression étant conçue de sorte qu'une partie du flux de carburant à pression élevée soit déviée pour former un flux de recirculation qui circule à travers et refroidit le moteur électrique avant d'être renvoyé à la roue pour être re-pressurisé par celle-ci.

2. Unité de pompage de carburant selon la revendication 1, le moteur électrique étant entièrement immergé dans le carburant pompé.

3. Moteur d'aéronef ayant une unité de pompage de carburant selon l'une quelconque des revendications précédentes.
